# FASCICULE DE BREVET EUROPEEN

(11) **EP 0 557 217 B1**
(45) Date de publication et mention de la délivrance du brevet: **29.04.1998**
(21) Numéro de dépôt: 93420071.8
(22) Date de dépôt: 16.02.1993
(51) Int. Cl.: G01P 15/08, G01P 15/125, G01L 9/00

(54) **Micro-capteur capacitif à faible capacité parasite et procédé de fabrication**
Kapazitiver Mikrosensor mit geringer parasitärer Kapazität und Verfahren zur dessen Herstellung
Capacitive micro-sensor with reduced parasitic capacitance and method of manufacturing the same

(30) Priorité: 20.02.1992 FR 9202190
(43) Date de publication de la demande: 25.08.1993
(73) Titulaire: SEXTANT AVIONIQUE S.A., 92366 Meudon la Forêt Cédex (FR)
(72) Inventeur: Thomas, Isabelle, F-26000 Valence (FR); Lefort, Pierre-Olivier, F-26000 Valence (FR); Legoux, Christophe, F-26000 Valence (FR)
(74) Mandataire: de Beaumont, Michel

(56) Documents cités:
- EP-A- 0 369 352
- US-A- 5 006 487

## Description

La présente invention concerne le domaine des micro-capteurs capacitifs en silicium. De tels micro-capteurs peuvent par exemple constituer des capteurs de pression, des capteurs d'accélération...

Ces dernières années, se sont développés de nouveaux types de micro-capteurs en silicium, tirant partie des techniques de gravure du silicium développées dans le cadre de la fabrication des composants électroniques à semiconducteurs. Au début, de tels micro-capteurs étaient constitués de l'assemblage de plaquettes de silicium convenablement gravées et de lames minces de verre servant de boîtier étanche ou de plaques de séparation isolantes entre des plaquettes de silicium, ces lames de verre portant éventuellement divers motifs d'électrodes métalliques.

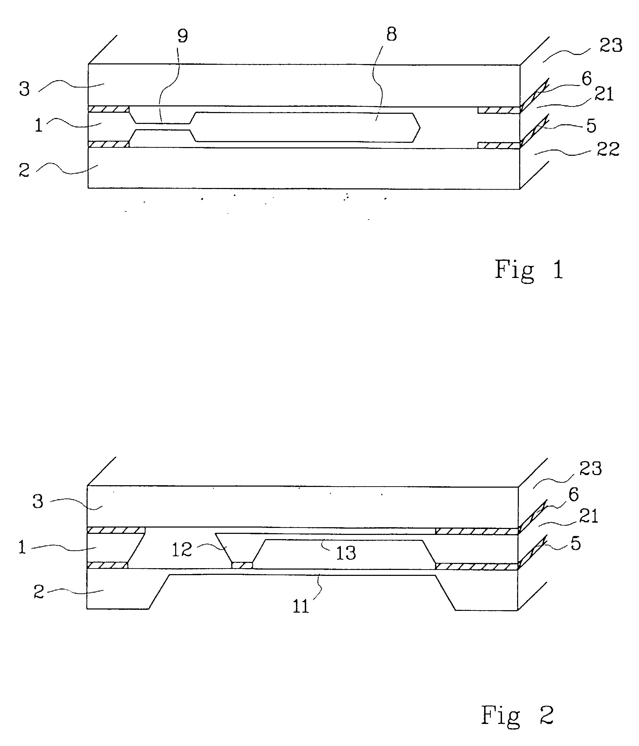

On tend actuellement à développer des micro-capteurs entièrement en silicium, sans plaque de verre jouant un rôle actif. Des exemples très schématiques de tels capteurs sont illustrés en figures 1 et 2.

Le capteur de la figure 1 est un capteur d'accélération et le capteur de la figure 2 un capteur de pression. Chacun de ces capteurs comprend une plaquette de silicium centrale 1 prise en sandwich entre des plaquettes de silicium externes 2 et 3. L'isolement entre les plaquettes est assuré par une première bande isolante, généralement une couche d'oxyde de silicium, 5 entre les plaquettes 1 et 2 et une deuxième bande isolante 6 entre les plaquettes 1 et 3. Ces bandes isolantes prennent la forme d'un cadre disposé entre des plaquettes adjacentes, le long des bords de celles-ci. Des couches d'oxyde peuvent être obtenues par croissance ou dépôt à partir de l'une des plaquettes adjacentes. Une fois les trois plaquettes appliquées les unes contre les autres, une soudure est réalisée par un recuit à une température de 900 à 1100°C. Pour cela, la pratique montre qu'il convient que les surfaces de silicium et d'oxyde de silicium en regard aient de très faibles rugosités, par exemple inférieures à 0,5 nm. Les plaquettes de silicium extrêmes 2 et 3 définissent entre elles et avec la partie de cadre de la plaquette de silicium 1 une région dans laquelle est contenue une atmosphère contrôlée, par exemple une atmosphère à très faible pression, appelée vide.

La description précédente s'applique communément aux micro-capteurs des figures 1 et 2.

Dans le cas de la figure 1, qui représente schématiquement une vue en coupe d'un accéléromètre, la plaquette de silicium centrale 1 est gravée avant assemblage pour comprendre un cadre et une plaque centrale ou masselotte 8 fixée au cadre par des barres minces de suspension 9. Une seule barre apparaît dans la vue en coupe schématique de la figure 1. De façon classique, on utilisera des systèmes de suspension à deux ou quatre barres. Les plaquettes externes 1 et 3 délimitent avec le cadre formé à la périphérie de la plaquette centrale un espace vide. On détecte les variations de capacité entre la face supérieure de la masselotte et la plaquette de silicium 3 et éventuellement également entre la face inférieure de la masselotte et la plaquette inférieure 2. Quand le dispositif est soumis à une accélération, la masselotte 8 se déplace par rapport à l'ensemble du dispositif et les capacités susmentionnées varient. Il est également généralement prévu un asservissement électrostatique pour maintenir en place la masselotte par application d'un champ électrique continu et c'est alors le signal d'erreur qui donne une indication de la variation de capacité. Le document EP-A- 0 369 352 décrit un micro-accéléromètre de ce type et prévoit en outre que la couche isolante peut être remplacée par un sandwich de couches isolantes pour faciliter l'assemblage.

La figure 2 représente très schématiquement une structure constituant un capteur de pression. La plaquette inférieure 2 est gravée pour y former une membrane mince 11. La plaquette 1 est gravée pour former un plot 12 appuyé sur cette membrane. Une lamelle de silicium 13 s'étend entre ce plot et le cadre de la plaquette 1. A nouveau, l'espace délimité par la plaquette supérieure, la plaquette inférieure et le cadre de la plaquette centrale définit un espace vide. Des variations de pression externe déforment la membrane 11 et entraînent une déformation de la tension de la lamelle 13. Cette variation de tension entraîne une variation de la fréquence de résonance du résonateur capacitif constitué par la lamelle 13 et la surface en regard de la plaquette 3. De préférence, la face interne de la plaquette 3 est gravée pour former une bande en saillie en face de la lamelle 13.

Dans le cas de la figure 1, des électrodes 21, 22 et 23 doivent être respectivement solidaires des plaquettes 1, 2 et 3. Dans le cas de la figure 2, seules les électrodes 21 et 23 seront nécessaires.

Ces structures de l'art antérieur, qu'elles utilisent directement une mesure de capacité ou une mesure de fréquence de résonance, présentent l'inconvénient que ces mesures sont fortement affectées par la présence de capacités parasites élevées. Ces capacités parasites correspondent essentiellement aux capacités entre le cadre formé dans la plaquette 1 et les parties en regard de la plaquette supérieure et/ou inférieure, capacités dont le diélectrique est constitué par les couches d'isolant (oxyde de silicium) 5 et 6.

Un objet de la présente invention est de prévoir une structure de micro-capteur permettant d'éviter l'influence de ces capacités parasites.

Pour atteindre cet objet, la présente invention prévoit un micro-capteur capacitif comprenant un sandwich de trois plaquettes de silicium, une bande périphérique de chaque face de la plaquette centrale étant accolée à une bande correspondante de la face en regard d'une plaquette externe par l'intermédiaire d'une bande isolante, l'une au moins des plaquettes externes constituant une première électrode, la plaquette centrale constituant une deuxième électrode et au moins une partie de cette plaquette centrale formant une capacité variable avec au moins l'une des plaquettes externes. Au moins une des bandes isolantes est constituée d'un sandwich d'une première couche isolante, d'une couche intermédiaire et d'une deuxième couche isolante. La couche intermédiaire est une couche conductrice associée à des moyens de connection.

Quand le micro-capteur capacitif constitue un accéléromètre, la partie susmentionnée de la plaquette centrale forme une masselotte en suspension.

Quand le micro-capteur capacitif constitue un capteur de pression, la plaquette inférieure comprend une partie amincie formant membrane et la plaquette centrale comprend un plot monté sur cette membrane et une bande s'étendant entre le plot et une partie périphérique de cette plaquette centrale, cette bande formant avec la plaquette supérieure un résonateur capacitif de caractéristiques variables en fonction de la pression appliquée.

Selon un mode de réalisation de la présente invention, la couche conductrice est mise au potentiel de référence auquel est placée, éventuellement de façon flottante, la plaquette centrale.

Selon un mode de réalisation de la présente invention, les première et deuxième couches isolantes sont en oxyde de silicium et la couche conductrice en silicium polycristallin.

Selon un mode de réalisation de la présente invention, les première et deuxième couches isolantes sont en oxyde de silicium et la couche conductrice en silicium monocristallin.

La présente invention prévoit aussi un procédé de fabrication d'un micro-capteur capacitif qui consiste à graver la plaquette centrale pour former un cadre et une partie centrale sensible, les deux faces du cadre étant revêtues d'une couche d'oxyde de silicium ; à former sur une face, tournée vers la plaquette centrale, de chacune des plaquettes externes un cadre constitué de la superposition d'une couche d'oxyde de silicium et d'une couche de silicium polycristallin ; et à assembler les plaquettes externes et la plaquette centrale.

La présente invention prévoit aussi un procédé de fabrication d'un micro-capteur capacitif qui consiste à graver la plaquette centrale selon le profil désiré ; à former dans chaque plaquette externe une implantation profonde d'oxygène recuite pour former une couche d'oxyde de silicium enterrée puis à oxyder la plaquette externe et à graver cette plaquette externe jusqu'à traverser la couche d'oxyde de silicium extérieure, la couche de silicium monocristallin intercalaire et la couche d'oxyde enterrée pour laisser en place seulement un cadre ; et à assembler les plaquettes externes et la plaquette centrale.

Ces objets, caractéristiques et avantages ainsi que d'autres de la présente invention seront exposés en détail dans la description suivante de modes de réalisation particuliers faite en relation avec les figures jointes parmi lesquelles :
les figures 1 et 2 décrites précédemment sont des vues en coupe schématique d'un micro-capteur d'accélération et d'un micro-capteur de pression selon l'art antérieur ;
La figure 3 est une vue en coupe d'un mode de réalisation d'un micro-capteur d'accélération selon la présente invention ;
La figure 4 est une vue de dessus d'un mode de réalisation d'un micro-capteur selon la présente invention ;
la figure 5 est un schéma électrique faisant ressortir les avantages de la présente invention ;
les figures 6A à 6D représentent des étapes successives de fabrication de la plaquette centrale selon un premier mode de réalisation de la présente invention ;
les figures 7A et 7B représentent des étapes successives de fabrication d'une plaquette externe selon le premier mode de réalisation de la présente invention ;
la figure 8 représente un deuxième mode de réalisation d'une plaquette centrale selon la présente invention ; et
les figures 9A à 9D représentent des étapes successives de fabrication d'une plaquette externe dans le cadre du deuxième mode de réalisation de la présente invention.

Dans les diverses figures, les épaisseurs relatives des diverses couches et les dimensions latérales des divers éléments ne sont pas à l'échelle mais ont été tracées arbitrairement pour faciliter la lisibilité des figures et en simplifier le dessin.

Egalement, dans les diverses figures, les faces latérales des diverses plaquettes de silicium ont été représentées comme gravées de façon oblique puisque c'est l'aspect que prennent ces faces latérales quand on a réalisé une gravure anisotrope de silicium selon des plans (1,1,1). Toutefois, on notera d'une part que ceci ne constitue pas une limitation de la présente invention, d'autre part que l'angle figurant sur les figures est arbitraire. Un exemple d'angle réel serait d'environ 55°.

La description ci-après de modes de réalisation particuliers de la présente invention est faite dans le cadre d'une structure de type micro-capteur d'accélération correspondant à celle de la figure 1. Toutefois, la présente invention s'applique de façon générale à d'autres types de micro-capteurs constitués d'un assemblage de plusieurs plaquettes de silicium.

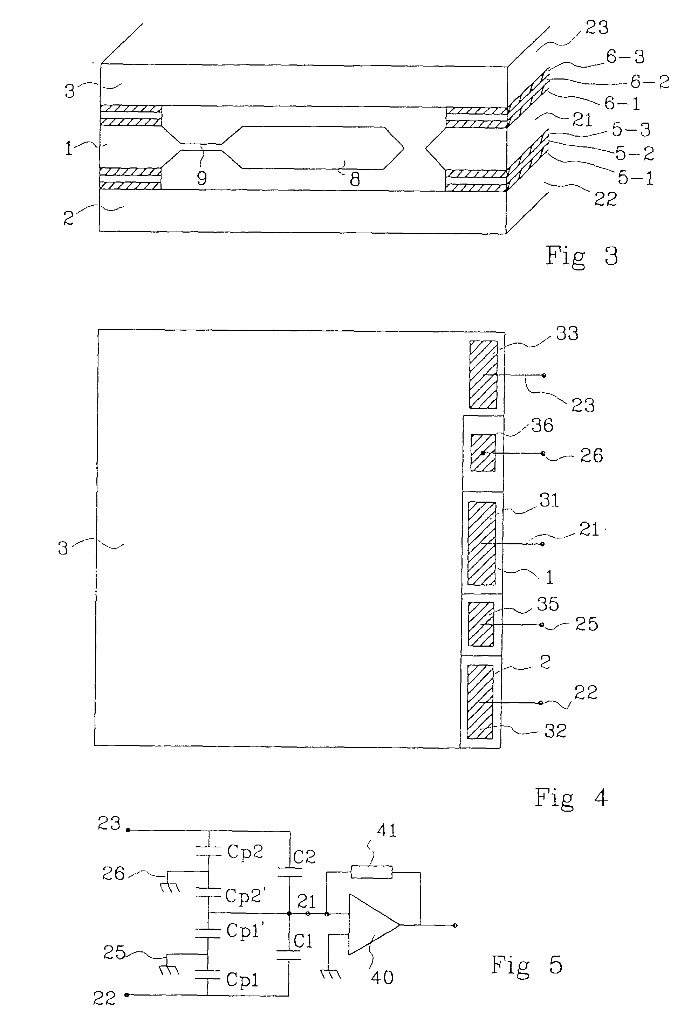

La figure 3 est une vue en coupe schématique d'un micro-capteur d'accélération modifié selon la présente invention. Dans cette figure, des éléments analogues à ceux de la figure 1 sont désignés par de mêmes références numériques. Chacune des couches isolantes 5 et 6 de la figure 1 est remplacée par un sandwich comprenant une couche conductrice disposée entre deux couches isolantes. Ainsi, la couche isolante 5 est remplacée par une couche isolante 5-1, une couche conductrice 5-2, et une couche isolante 5-3. De même, la couche isolante 6 est divisée en une couche isolante 6-1, une couche conductrice 6-2 et une couche isolante 6-3.

La figure 4 est une vue de dessus schématique du dispositif de la figure 3 et illustre une façon dont peuvent être pris des contacts sur les plaquettes 1, 2 et 3, d'une part, et sur les couches conductrices 5-2 et 6-2 d'autre part. Ce résultat est obtenu en ménageant des encoches progressives dans les plaquettes et couches superposées. Ainsi, une métallisation 33 sur la plaquette 3 correspond à la connexion 23, une métallisation 31 sur la plaquette 1 correspond à la connexion 21 et une métallisation 32 sur la plaquette 2 correspond à la connexion 22. En outre, des métallisations 35 et 36 sur les couches conductrices 5-2 et 6-2, correspondent respectivement à des connexions 25 et 26.

L'avantage de la présence des couches conductrices 5-2 et 6-2 ressort du schéma électrique de la figure 5. Dans ce schéma, on retrouve les bornes 21, 22 et 23. Le condensateur C1 correspond à la capacité entre la plaquette 2 et la masselotte 8. Le condensateur C2 correspond à la capacité entre la plaquette 3 et la masselotte 8. La capacité parasite entre la plaquette inférieure 2 et la plaquette centrale 1 correspond essentiellement à deux capacités parasites en série CP1 et CPl' disposées entre les bornes 22 et 21 et dont le point de connexion est relié à la borne 25. De même, la capacité parasite entre les plaquettes 1 et 3 correspond essentiellement à deux capacités parasites en série CP2 et CP2' disposées entre les bornes 21 et 23 et dont le point de connexion est relié à la borne 26. A la droite de la figure 5, on a représenté l'étage d'entrée habituel d'un système de mesure de capacité qui comprend un amplificateur opérationnel 40 dont la sortie est ramenée sur la première entrée par une impédance de réaction 41. La première entrée de l'amplificateur opérationnel est reliée à la borne 21 et la deuxième entrée à un potentiel de référence, par exemple la masse. Ainsi, la borne 21 se trouve à un potentiel flottant correspondant audit potentiel de référence. Les bornes 22 et 23 reçoivent dans la plupart des cas, de façon symétrique, la superposition d'une tension continue et d'une tension alternative. Si les bornes 25 et 26 sont reliées au même potentiel de référence que la deuxième entrée de l'amplificateur 40, par exemple la masse, les capacités parasites n'auront plus aucun effet sur la mesure puisque les deux bornes des capacités CP1' et CP2' sont au même potentiel.

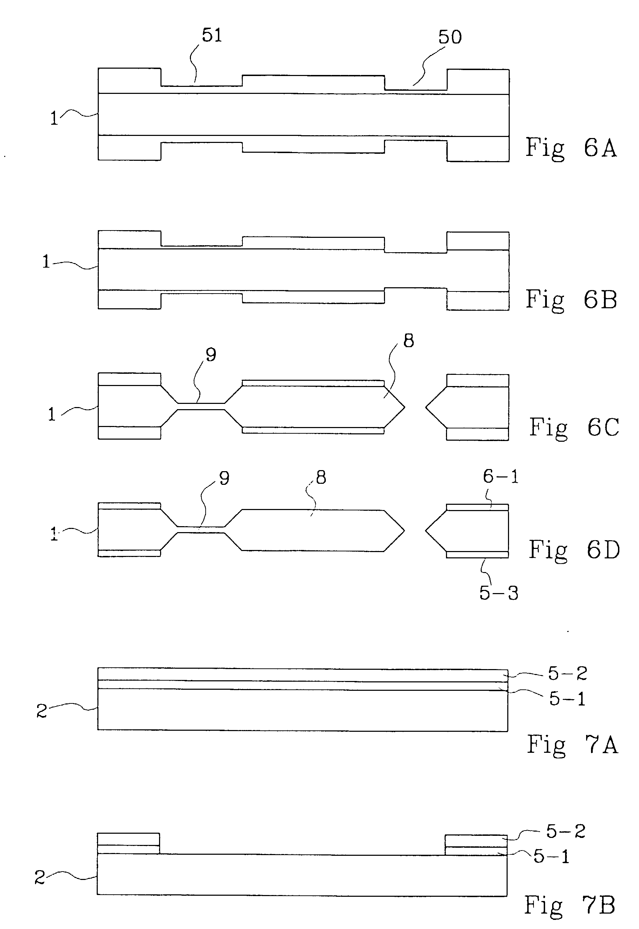

Les figures 6A à 7B illustrent un premier mode de fabrication d'un dispositif selon l'invention.

Les figures 6A à 6D illustrent des étapes successives de formation de la plaquette centrale.

A la figure 6A, la plaquette est initialement recouverte symétriquement d'un masque d'oxyde d'une épaisseur faible dans une région 50 et d'une épaisseur intermédiaire dans une région 51.

A l'étape de la figure 6B, la couche d'oxyde au dessus des régions 50 est éliminée et des rainures sont formées à leurs emplacements dans la plaquette.

A l'étape de la figure 6C, on a éliminé la couche d'oxyde 51 et on a procédé à une gravure chimique en utilisant les couches d'oxyde restantes comme masque pour découper la masselotte 8 et former les bras de suspension 9.

Enfin, à l'étape de la figure 6D, on procède à une gravure de l'oxyde pour éliminer les couches d'oxyde sur les faces principales de la masselotte 8 et laisser des couches d'oxyde sur le pourtour de la plaquette, ces couches correspondant aux couches 5-3 et 6-1 de la figure 3.

Les figures 7A et 7B représentent deux étapes successives de fabrication des plaquettes externes, par exemple la plaquette 2. Dans un premier temps est formée une couche d'oxyde 5-1, par exemple par oxydation thermique, puis une couche de silicium polycristallin 5-2 est déposée, par exemple par dépôt chimique en phase vapeur sur la couche d'oxyde. Ensuite, les couches de silicium polycristallin et d'oxyde sont gravées pour laisser en place, comme le représente la figure 7B, des zones latérales correspondant aux couches 5-1 et 5-2 de la figure 3.

L'étape suivante de fabrication consiste à accoler les trois plaquettes, la couche de silicium polycristallin 5-2 étant en regard de la couche d'oxyde de silicium 5-3 et la couche de silicium polycristallin 6-2 étant en regard de la couche d'oxyde de silicium 6-1. Après cela, la soudure est obtenue par chauffage à une température de l'ordre de 900 à 1100°C.

Pour que la soudure soit de bonne qualité, il convient que la granularité de la couche de silicium polycristallin soit faible, c'est pourquoi on préfère qu'elle soit déposée sur une couche d'oxyde 'thermique plutôt que sur une couche d'oxyde déposée qui serait plus rugueuse.

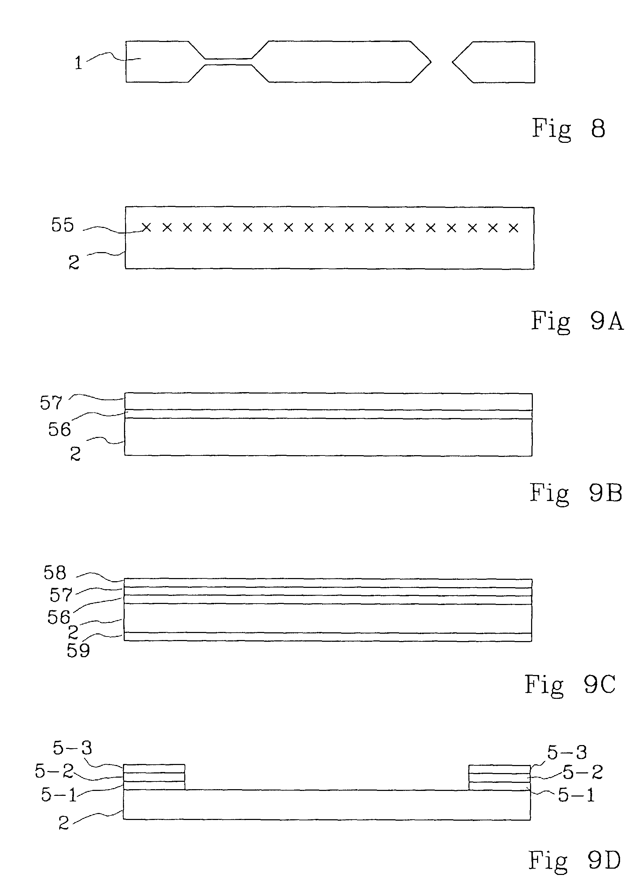

Les figures 8 à 9D illustrent un deuxième mode de réalisation d'une structure selon la présente invention.

La figure 8 représente l'allure de la plaquette 1 prégravée. On notera que dans ce mode de réalisation, il n'y a aucune couche d'oxyde sur cette plaquette.

Les figures 9A à 9D illustrent des étapes successives de fabrication d'une plaquette externe, par exemple la plaquette 2.

Dans une première étape, illustrée en figure 9A, on implante sous la surface supérieure de la plaquette de silicium monocristallin 2 des atomes d'oxygène 55.

Dans une deuxième étape, illustrée en figure 9B, on procède à un recuit pour obtenir une couche d'oxyde 56 surmontée d'une couche de silicium 57. L'état de surface de la couche de silicium 57 correspond sensiblement à l'état de surface initiale de la plaquette de silicium monocristallin 2 et a donc une très faible rugosité.

A l'étape illustrée à la figure 9C, on a procédé à une oxydation thermique pour former à la surface de la couche de silicium 57 une couche d'oxyde de silicium 58. Dans certains modes de fabrication, il se forme simultanément sur la face arrière de la plaquette 2 une couche d'oxyde 59 qui est ensuite éliminée.

A l'étape de la figure 9D, on a représenté la structure obtenue après gravure des couches 56, 57 et 58 pour laisser en place seulement un cadre constitué d'un empilement d'une couche d'oxyde de silicium 5-1, d'une couche de silicium monocristallin 5-2 et d'une deuxième couche d'oxyde de silicium 5-3.

Un avantage de ce deuxième mode de réalisation est que la planéité de la surface de la couche d'oxyde externe est excellente et donc que l'opération de soudure ultérieure avec la plaquette 1 est tout particulièrement satisfaisante.

Ce deuxième procédé est susceptible de diverses variantes. Par exemple, si l'on considère que la couche de silicium 57 n'est pas assez épaisse, on pourra procéder à un dépôt épitaxial de silicium au-dessus de cette couche 57 pour l'épaissir. Un tel dépôt épitaxial permet de maintenir une excellente qualité de surface.

L'homme de l'art notera que la présente invention est susceptible de diverses variantes et modifications, restant néanmoins dans le cadre du libellé des revendications. Par exemple, après assemblage des trois plaquettes, la surface externe des plaquettes externes pourra être oxydée et revêtue d'une couche métallique formant blindage, pouvant également être reliée à la masse pour protéger le dispositif contre des surtensions parasites. Par ailleurs, des modes de réalisation d'un type de micro-capteur spécifique ont été illustrés mais la présente invention s'applique de façon générale à divers micro-capteurs de type capacitif, ou à résonance dans lesquels on souhaite éliminer l'influence des capacités parasites associées au pourtour de la cavité interne du capteur.

On a décrit et représenté schématiquement ci-dessus la fabrication d'un micro-capteur selon la présente invention. Il apparaîtra clairement à l'homme de l'art qu'en pratique cette fabrication résulte d'un procédé collectif, chaque plaquette faisant initialement partie d'une plaque de plus grande dimension, la séparation en capteurs individuels se faisant après les opérations finales d'assemblage et éventuellement de formation de contact.

Dans ce qui précède, il a été indiqué que la partie interne du capteur est une zone à atmosphère réduite. Pour obtenir ce vide, l'homme de l'art pourra utiliser divers procédés. Par exemple, les plaquettes pourront être accolées dans une enceinte vide, ou bien un pompage pourra être réalisé après assemblage des plaquettes. Il est également possible de prévoir un remplissage des plaquettes par un gaz tel que de l'oxygène susceptible d'être, par recuit, absorbé par le silicium.

## Revendications

1. Micro-capteur capacitif comprenant un sandwich de trois plaquettes de silicium (1, 2, 3), une bande périphérique de chaque face de la plaquette centrale étant accolée à une bande correspondante de la face en regard d'une plaquette externe par l'intermédiaire d'une bande isolante (5, 6), l'une au moins des plaquettes externes constituant une première électrode (22, 23), la plaquette centrale constituant une deuxième électrode (21) et au moins une partie de cette plaquette centrale formant une capacité variable avec au moins l'une des plaquettes externes, au moins une des bandes isolantes étant constituée d'un sandwich d'une première couche isolante (5-1, 6-1), d'une couche intermédiaire (5-2, 6-2) et d'une deuxième couche isolante (5-3, 6-3), caractérisé en ce que la couche intermédiaire est une couche conductrice associée à des moyens de connexion (25, 26).

2. Micro-capteur capacitif selon la revendication 1 constituant un accéléromètre, caractérisé en ce que ladite partie de la plaquette centrale forme une masselotte en suspension (8).

3. Micro-capteur capacitif selon la revendication 1 constituant un capteur de pression, caractérisé en ce que la plaquette inférieure comprend une partie amincie (11) formant membrane et en ce que la plaquette centrale comprend un plot (12) monté sur cette membrane et une bande s'étendant entre le plot et une partie périphérique de cette plaquette centrale, cette bande formant avec la plaquette supérieure un résonateur capacitif de caractéristiques variables en fonction de la pression appliquée.

4. Micro-capteur capacitif selon la revendication 1, caractérisé en ce que ladite couche conductrice (5-2, 6-2) est mise au potentiel de référence auquel est placée, éventuellement de façon flottante, la plaquette centrale (21).

5. Micro-capteur capacitif selon la revendication 1, caractérisé en ce que les première (5-1, 6-1) et deuxième (5-3, 6-3) couches isolantes sont en oxyde de silicium et la couche conductrice (5-2, 6-2) en silicium polycristallin.

6. Micro-capteur capacitif selon la revendication 1, caractérisé en ce que les première (5-1, 6-1) et deuxième (5-3, 6-3) couches isolantes sont en oxyde de silicium et la couche conductrice (5-2, 6-2) en silicium monocristallin.

7. Procédé de fabrication d'un micro-capteur capacitif selon la revendication 5, caractérisé en ce qu'il consiste à graver la plaquette centrale (1) pour former un cadre et une partie centrale sensible (9), les deux faces du cadre étant revêtues d'une couche d'oxyde de silicium (5-3, 6-1) ; à former sur une face, tournée vers la plaquette centrale, de chacune des plaquettes externes (2, 3) un cadre constitué de la superposition d'une couche d'oxyde de silicium (5-1, 6-3) et d'une couche de silicium polycristallin (5-2, 6-2) ; et à assembler les plaquettes externes et la plaquette centrale.

8. Procédé de fabrication d'un micro-capteur capacitif selon la revendication 6, caractérisé en ce qu'il consiste à graver la plaquette centrale selon le profil désiré ; à former dans chaque plaquette externe une diffusion profonde d'oxygène (55) recuite pour former une couche d'oxyde de silicium enterrée (56) puis à oxyder la plaquette externe et à graver cette plaquette externe jusqu'à traverser la couche d'oxyde de silicium extérieure (58), la couche de silicium monocristallin intercalaire (57) et la couche d'oxyde enterrée (56) pour laisser en place seulement un cadre (5-1, 5-2, 5-3) ; et à assembler les plaquettes externes et la plaquette centrale.

## Patentansprüche

1. Kapazitiver Mikrosensor bzw. -meßfühler, welcher eine Sandwich-Schichtanordnung von drei Siliziumplättchen (1, 2, 3) umfaßt, wobei ein Umfangsstreifen jeder Oberfläche des mittleren Plättchens mit einem entsprechenden Streifen der gegenüberstehenden Oberfläche eines äußeren Plättchens vermittels eines Isolierstreifens (5, 6) verbunden ist, und wobei wenigstens eines der äußeren Plättchen eine erste Elektrode (22, 23) bildet, das mittlere Plättchen eine zweite Elektrode (21) bildet und wenigstens ein Teil dieses mittleren Plättchens eine veränderliche Kapazität mit wenigstens einer der äußeren Plättchen bildet, und wobei wenigstens einer der Isolierstreifen aus einer Sandwich-Schichtung einer ersten Isolierschicht (5-1, 6-1), einer Zwischenschicht (5-2, 6-2) und einer zweiten Isolierschicht (5-3, 6-3) besteht,
dadurch gekennzeichnet, daß die mittlere Schicht eine Anschlußmitteln (25, 26) zugeordnete leitende Schicht ist.

2. Kapazitiver Mikrosensor bzw. -meßfühler nach Anspruch 1, der einen Beschleunigungsmesser bildet,
dadurch gekennzeichnet, daß der genannte Teil des mittleren Plättchens einen Inertial- oder Masseblock (8) mit Aufhängung bildet.

3. Kapazitiver Mikrosensor bzw. -meßfühler nach Anspruch 1, der einen Druckfühler darstellt,
dadurch gekennzeichnet, daß das untere Plättchen einen eine Membran bildenden verdünnt ausgebildeten Teil (11) aufweist und daß das mittlere Plättchen einen auf dieser Membran angeordneten Klotz bzw. Stutzen (12) und einen sich zwischen diesem Klotz bzw. Stutzen und einem Umfangsteil dieses mittleren Plättchens erstreckenden Streifen aufweist, wobei dieser Streifen mit dem oberen Plättchen einen kapazitiven Resonator mit in Abhängigkeit von dem anliegenden Druck veränderlichen charakteristischen Eigenschaften bildet.

4. Kapazitiver Mikrosensor bzw. -meßfühler nach Anspruch 1,
dadurch gekennzeichnet, daß die genannte leitende Schicht (5-2, 6-2) an das Bezugspotential gelegt wird, auf welchem gegebenenfalls in frei flottierender Weise sich das mittlere Plättchen (21) befindet.

5. Kapazitiver Mikrosensor bzw. -meßfühler nach Anspruch 1,
dadurch gekennzeichnet, daß die erste (5-1, 6-1) und die zweite (5-3, 6-3) Isolierschicht aus Siliziumoxid und die leitende Schicht (5-2, 6-2) aus polykristallinem Silizium besteht.

6. Kapazitiver Mikrosensor bzw. -meßfühler nach Anspruch 1,
dadurch gekennzeichnet, daß die erste (5-1, 6-1) und die zweite (5-3, 6-3) Isolierschicht aus Siliziumoxid und die leitende Schicht (5-2, 6-2) aus monokristallinem Silizium besteht.

7. Verfahren zur Herstellung eines kapazitiven Mikrosensors bzw. -meßfühlers nach Anspruch 5,
dadurch gekennzeichnet, daß das Verfahren die Schritte umfaßt: das mittlere Plättchen (1) wird zur Bildung eines Rahmens und eines ansprechempfindlichen Mittelteils (9) geätzt, wobei die beiden Oberflächen des Rahmens mit einer Siliziumoxidschicht (5-3, 6-1) überzogen werden; auf der dem mittleren Plättchen zugewandten einen Oberfläche jedes äußeren Plättchens (2, 3) wird ein aus der Übereinanderanordnung einer Siliziumoxidschicht (5-1, 6-3) und einer polykristallinen Siliziumschicht (5-2, 6-2) bestehender Rahmen erzeugt; und die äußeren Plättchen und das mittlere Plättchen werden miteinander zusammengebaut.

8. Verfahren zur Herstellung eines kapazitiven Mikrosensors bzw. -meßfühlers nach Anspruch 6,
dadurch gekennzeichnet, daß es die Schritte umfaßt: das mittlere Plättchen wird gemäß einem gewünschten Profil geätzt; in jedem der äußeren Plättchen wird eine glühvergütete tiefe Sauerstoffdiffusion (55) zur Bildung einer vergrabenen Siliziumoxidschicht (56) vorgenommen und sodann das äußere Plättchen oxidiert und bis zur Durchdringung der äußeren Siliziumoxidschicht (58), der Zwischenschicht (57) aus monokristallinem Silizium und der vergrabenen Oxidschicht (56) geätzt, derart daß nur ein Rahmen (5-1, 5-2, 5-3) verbleibt; sowie Zusammenbau der äußeren Plättchen und des mittleren Plättchens.

## Claims

1. A capacitive micro-sensor including a sandwich of three silicon wafers (1,2,3), a peripheral stripe of each surface of the central plate being assembled to a corresponding stripe of an opposing external plate through an insulating stripe (5,6), at least one of said external plates forming a first electrode (22,23), the central plate forming a second electrode (21) and at least one portion of said central plate forming a variable capacity with at least one of said external plates, at least one of said insulating layers being formed by a sandwich of a first insulating layer (5-1,6-1), an intermediate layer (5-2,6-2) and a second insulating layer (5-3,6-3), characterized in that said intermediate layer is a conductive layer associated with connection means (25,26).

2. The capacitive micro-sensor of claim 1 forming an accelerometer, characterized in that said portion of the central plate forms an inertia block (8).

3. The capacitive micro-sensor of claim 1 forming a pressure sensor, characterized in that the lower plate includes a thinne portion (11) forming a diaphragm, said central plate including a stud (12) mounted onto said diaphragm, and a stripe extending between said stud and a peripheral portion of said central plate, said stripe forming with said upper plate a capacitive resonator whose characteristics vary as a function of the applied pressure.

4. The capacitive micro-sensor of claim 1, characterized in that said conductive layer (5-2,6-2) is set to the reference voltage to which the central plate is connected, possibly in a floatting way.

5. The capacitive micro-sensor of claim 1, characterized in that said first (5-1,6-1) and second (5-3,6-3) insulating layers are made of silicon oxide and said conductive layer (5-2,6-2) is made of polysilicon.

6. The capacitive micro-sensor of claim 1, characterized in that said first (5-1,6-1) and second (5-3,6-3) insulating layers are made of silicon oxide and said conductive layer (5-2,6-2) is made of single-crystal silicon.

7. A method for manufacturing the capacitive micro-sensor of claim 5, characterized in that comprises the following steps:
etching said central plate (1) in order to form a frame and a sensitive central portion (9), the two surfaces of said frame being plated with a silicon oxide layer (5-3,6-1);
forming on one surface of each external plate (2, 3), facing to words said central plate, a frame constituted by a silicon oxide layer (5-1,6-3) and a polycrystalline silicon layer (5-2,6-2); and
assembling the external plates with the central plate.

8. A method for manufacturing the capacitive micro-sensor of claim 6, characterized in that comprises the following steps:
etching said central plate according to the desired pattern;
forming in each external plate a deep oxygen diffusion (55) annealed in order to form a buried silicon oxide layer (56);
oxidizing each external plate, and etching said external plates until the external silicon oxide layer (58), the central single-crystal silicon layer (57) and said buried oxide layer (56) are traversed, to leave only a frame (5-1,5-2,5-3) in place; and
assembling said external plates and said central plate.
